# FASCICULE DE BREVET EUROPEEN

(11) **EP 0 732 523 B1**
(45) Date de publication et mention de la délivrance du brevet: **18.07.2001**
(21) Numéro de dépôt: 96103873.4
(22) Date de dépôt: 12.03.1996
(51) Int. Cl.: F16F 15/123

(54) **Friction d'embrayage, notamment pour véhicule automobile**
Reibungskupplung, insbesondere für Kraftfahrzeuge
Friction clutch, especially for motor vehicles

(30) Priorité: 14.03.1995 FR 9502929
(43) Date de publication de la demande: 18.09.1996
(73) Titulaire: VALEO, 75017 Paris (FR)
(72) Inventeur: Viola, Paolo, 75007 Paris (FR); Tauvron, Fabrice, 91200 Athis-Mons (FR)
(74) Mandataire: Gamonal, Didier

(56) Documents cités:
- EP-A- 0 321 697
- FR-A- 2 282 578
- FR-A- 2 618 199
- GB-A- 2 254 398
- GB-A- 2 254 907

## Description

L'invention concerne les disques d'embrayage du genre comportant au moins deux parties coaxiales, qui sont montées rotatives l'une par rapport à l'autre dans les limites d'un débattement angulaire déterminé et à l'encontre de moyens élastiques à action circonférentielle, et dont une porte un disque de friction, l'une desdites parties coaxiales comportant deux rondelles de guidage et l'autre un voile intermédiaire entre ces rondelles de guidage, et les moyens élastiques comportant, répartis circulairement, une pluralité d'éléments élastiques allongés dont chacun est disposé dans un logement formé pour partie par une fenêtre des rondelles de guidage et pour partie par un évidement du voile.

Pour certaines applications, au moins, notamment sur les véhicules automobiles, une faible raideur est recherchée pour l'ensemble des éléments élastiques allongés mis en oeuvre, pour filtrer les oscillations de torsion en provenance du moteur et ainsi éviter l'apparition de bruits.

Il a été proposé, dans ce but, de ne mettre en oeuvre qu'un nombre réduit de tels éléments élastiques allongés, qui, en pratique, sont chacun constitués par un ressort, de type ressort à boudin, ou deux ou plusieurs de tels ressorts disposés coaxialement.

Mais, eu égard à leur nombre réduit, les ressorts ainsi mis en oeuvre sont relativement longs.

Ils sont donc particulièrement flexibles latéralement.

Il en résulte qu'en service, et sous les effets conjugués de la sollicitation d'écrasement dont ils sont l'objet et de la force centrifuge, ils se mettent très rapidement en courbe, dès une vitesse de rotation relativement faible de l'ensemble.

Ils viennent donc très rapidement au contact du bord circonférentiel radialement le plus externe des fenêtres des rondelles de guidage, avant d'appuyer plus violemment sur toute sa longueur lorsque la vitesse de rotation de l'ensemble devient plus élevée.

Les inconvénients d'un tel contact et d'un tel appui sont multiples.

Tout d'abord, le frottement acier sur acier qu'ils impliquent rend difficile une évolution contrôlée de l'hystérésis en fonction de la vitesse, et, donc, malaisée une maîtrise convenable des conditions exactes de fonctionnement de l'ensemble.

En outre, ce frottement acier sur acier est inévitablement générateur d'usure, tant pour les ressorts et les rondelles de guidage que pour les culbuteurs par l'intermédiaire desquels ces ressorts prennent usuellement appui circonférentiellement à leurs extrémités.

Enfin, l'appui exercé par les ressorts sur les rondelles de guidage le long du bord circonférentiel radialement le plus externe des fenêtres de celles-ci, est de nature à entraîner de manière intempestive une déformation de ces rondelles de guidage, celles-ci étant d'autant plus affaiblies localement par ces fenêtres, et, donc, flexibles à cet endroit, que, eu égard à la longueur importante des ressorts, d'une part, et au fait que, de manière usuelle, ces ressorts s'étendent d'autre part chacun individuellement suivant une corde de l'ensemble au repos, ces fenêtres ont radialement une ouverture particulièrement grande, notamment dans leur zone médiane.

Dans le document GB-A-2 254 907, conforme au préambule de la revendication 1, les éléments élastiques comportent chacun d'eux des ressorts à boudin montés en série avec interposition entre les extrémités adjacentes des ressorts de segments conformés pour remplir l'espace entre les ressorts.

Les segments se déplacent avec les ressorts en étant en contact avec le logement concerné du voile.

Une telle solution complique la forme de l'évidement du voile.

L'invention a pour objet un disque d'embrayage dans laquelle ces inconvénients sont minimisés, sinon annulés, et qui, conjointement, présente d'autres avantages.

Ce disque ou friction d'embrayage, qui est du genre précisé ci-dessus, est d'une manière générale caractérisée en ce que, conjointement, les évidements que comporte le voile pour les éléments élastiques allongés sont ouverts radialement du côté opposé à l'axe de l'ensemble sur une partie au moins de leur longueur circonférentielle, en ce qu'il est prévu, au droit, au moins, de chacun de ces évidements, à la périphérie de plus grand diamètre des rondelles de guidage, une voûte, qui, axialement, s'étend de l'une à l'autre de ces rondelles de guidage, en étant solidaire de celles-ci, et qui, circulairement, s'étend sur toute la longueur circonférentielle, au moins, des fenêtres des rondelles de guidage, et en ce qu'une garniture en matière synthétique est adossée radialement à la surface interne de cette voûte, sur une partie au moins de la longueur circonférentielle de celle-ci. Grâce à une telle garniture, qui est préférentiellement en forme de goulotte, tout frottement métal sur métal est éliminé.

C'est en effet avec elle que prennent contact en service les ressorts constituant les éléments élastiques allongés.

Les rondelles de guidage sont plus économiques car elles ne nécessitent dès lors plus de traitement thermique, et il n'est pas non plus nécessaire de prévoir la présence d'une quelconque graisse.

En outre, par un choix de la matière synthétique constitutive de la garniture mise en oeuvre, éventuellement chargée, si désiré, d'un quelconque matériau anti-frottement, il est possible de minimiser le frottement, et par conséquent les usures, tout en améliorant le contrôle de l'hystérésis, avec même, le cas échéant, une possibilité de réglage de celui-ci.

Corollairement, cette garniture étant dûment contrebutée par une voûte, il est possible, si désiré, pour simplifier encore les rondelles de guidage, d'éliminer tout rebord formant oeillère le long du bord circonférentiel radialement le plus externe des fenêtres des rondelles de guidage.

Conjointement, cette voûte renforce avantageusement la résistance mécanique de ces rondelles de guidage, notamment au droit de leurs fenêtres.

En étant dûment assujettie, par exemple par sertissage, à l'une et l'autre des rondelles de guidage, cette voûte peut également assurer une liaison axiale suffisante entre ces rondelles de guidage pour que, si désiré, il puisse être envisagé d'éliminer les entretoises usuellement prévues à cet effet.

Le sertissage correspondant peut conjointement être avantageusement mis à profit pour lier le disque de friction à l'une des rondelles de guidage, sans donc qu'il soit nécessaire de prévoir pour lui à cet effet de quelconques autres moyens de fixation tels que rivets ou autres.

Les caractéristiques et avantages de l'invention ressortiront d'ailleurs de la description qui va suivre, à titre d'exemple, en référence aux dessins schématiques annexés sur lesquels :
- la figure 1 est, avec un arrachement local, une vue partielle en élévation d'une friction d'embrayage suivant l'invention ;
- la figure 2 en est une vue en coupe axiale, suivant la ligne brisée II-II de la figure 1 ;
- les figures 3, 4 et 5 sont des vues partielles en coupe axiale, qui, reprenant pour partie celle de la figure 2, correspondent chacune respectivement à diverses variantes de réalisation.

Tel qu'illustré sur ces figures, et de manière connue en soi, la friction d'embrayage 10 suivant l'invention comporte au moins deux parties coaxiales 11A, 11B, qui sont montées rotatives l'une par rapport à l'autre, dans les limites d'un débattement angulaire déterminé, et à l'encontre de moyens élastiques 12 à action circonférentielle, et dont une, ici la partie coaxiale 11A, porte un disque de friction 13, l'ensemble constituant, entre ce disque de friction 13 et un moyeu 14, un amortisseur principal 15 destiné à filtrer les vibrations ici, s'agissant d'une friction d'embrayage pour véhicule automobile, dans le régime de marche du véhicule. Le moyeu 14 est destiné à être calé en rotation sur un arbre mené, ici l'arbre d'entrée de la boîte de vitesses.

Le disque de friction 13, constituant l'élément d'entrée de la friction 10, comporte un voile mince 16, éventuellement fractionné en pales, et, portées à solidarisation, par collage et/ou rivetage, par ce voile mince 16, en s'étendant de part et d'autre de celui-ci, deux garnitures de frottement 17. Ces garnitures 17 sont destinées ici à être serrées entre le plateau de pression et de réaction de l'embrayage solidaires en rotation d'un arbre menant (le vilebrequin du moteur).

L'une des parties coaxiales 11A, 11B, ici la partie coaxiale 11A portant le disque de friction 13, comporte deux rondelles de guidage 18, et l'autre, ici la partie 11B, un voile 20, épais, intermédiaire entre Les rondelles de guidage 18, à distance de celles-ci.

Ici, les rondelles de guidage 18 sont, de place en place, reliées l'une à l'autre, par des entretoises 21, qui interviennent au voisinage leur périphérie de plus grand diamètre, en retrait par rapport à celle-ci, mais radialement au-delà de la périphérie de plus grand diamètre du voile 20, et qui s'étendent sensiblement parallèlement à l'axe de l'ensemble.

Ces entretoises 21 servent également à fixer le voile mince 16 accolé à l'une des rondelles de guidage. Ici, ces entretoises 21 sont boulonnées.

En variante, et, préférentiellement, elles sont serties.

Ici les entretoises 21 ont une section transversale circulaire, et seul un léger jeu les sépare de la périphérie de plus grand diamètre du voile 20.

Les rondelles de guidage 18 s'étendent librement autour du moyeu 14, formant l'élément de sortie de la friction 10.

Au contraire, à sa périphérie de plus petit diamètre, le voile 20 engrène avec jeu avec le moyeu 14 par des moyens d'engrènement à jeu 22.

Ici, les moyens élastiques 12 intervenant circonférentiellement entre les parties coaxiales 11A, 11B comportent, répartis circulairement, une pluralité d'éléments élastiques allongés 24, qui, tous, s'étendent sensiblement tangentiellement à une même circonférence de l'ensemble, et dont chacun est disposé dans un logement 25 formé pour partie par une fenêtre 26 des rondelles de guidage 18 et pour partie par un évidement 27 du voile 20.

Ici, ces éléments élastiques allongés 24 sont au nombre de trois, et ils sont chacun constitués de deux ressorts 24', 24", de type ressort à boudin, disposés coaxialement l'un dans l'autre, avec, monté flottant dans la zone centrale du ressort 24" le plus interne, un bloc en matière élastique 28.

Ici, les éléments élastiques allongés 24 portent, circonférentiellement, à leurs extrémités, sur des culbuteurs 29, qui, pour la configuration de repos de l'ensemble, qui est celle représentée, sont chacun engagés à pivotement, à la faveur d'une creusure sur des doigts 30 que le voile 20 forme circonférentiellement en saillie vers l'intérieur des logements 25.

Ici, ces culbuteurs 29 sont en matière synthétique, pour une réduction des bruits et des frottements.

Pour la configuration de repos représentée, les éléments élastiques allongés 24 s'étendent sensiblement de manière rectiligne, suivant, chacun individuellement, une corde de l'ensemble.

Il en résulte que le bord circonférentiel 31 radialement le plus interne des fenêtres 26 des rondelles de guidage 18 est lui-même rectiligne, et il en est de même pour le bord circonférentiel radialement le plus interne des évidements 27 du voile 20.

Au contraire, le bord circonférentiel 32 radialement le plus externe des fenêtres 26 des rondelles de guidage 18 s'étend de manière circulaire.

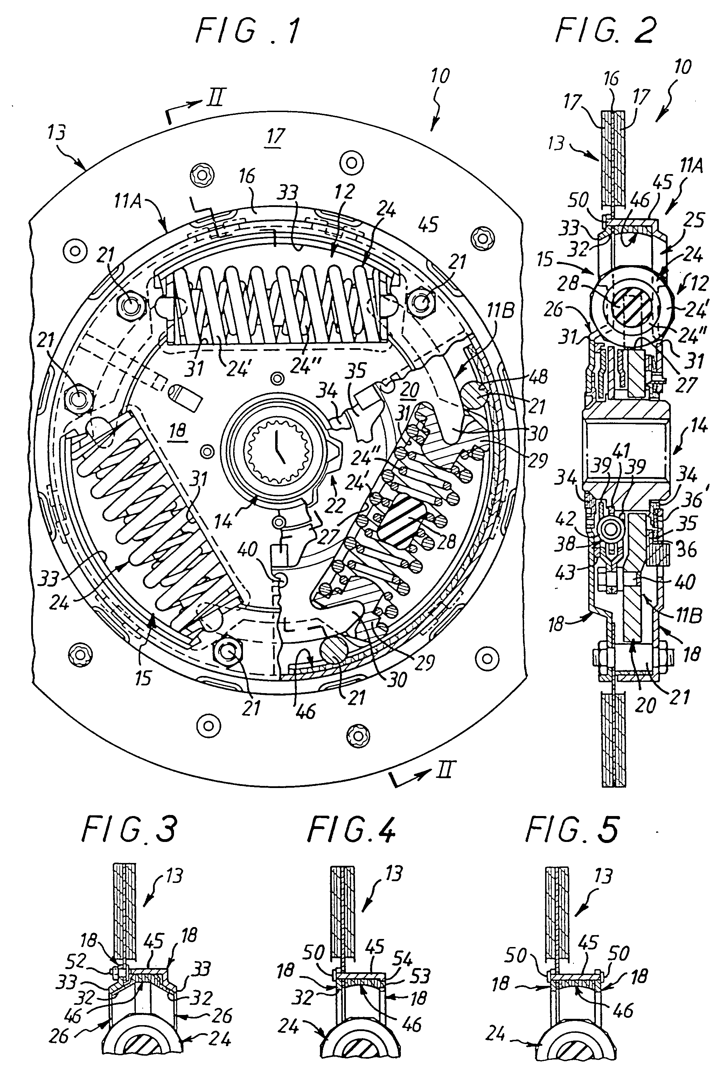

Sur les figures 1 à 3, les rondelles de guidage 18 comportent un rebord 33, formant oeillère, en saillie vers l'extérieur le long de ce bord circonférentiel 32 radialement le plus externe de leurs fenêtres 26, sur toute la longueur de celui-ci.

Sur les figures 4 et 5, ce rebord a été au contraire éliminé.

Pour l'obtention d'une certaine hystérésis, il est prévu, par ailleurs, au sein de l'amortisseur principal 15, des moyens de frottement à action axiale.

Ici, ces moyens de frottement comportent, d'une part, une rondelle de frottement 34, qui intervient, radialement et/ou axialement, entre chacune des rondelles de guidage 18 et le moyeu 14, en étant calée en rotation sur la rondelle de guidage 18, et d'autre part, une rondelle de frottement 35, qui intervient axialement entre la rondelle de guidage 18 et le voile 20, en étant calée en rotation sur la rondelle de guidage 18 et en étant sollicitée par une rondelle élastique 36 en direction du voile 20. La rondelle 34 est sollicitée en direction du moyeu 14 par une rondelle élastique 36'. Ici les rondelles 36,36' consistent en des rondelles Belleville, la rondelle 36' exerçant une charge inférieure à celle exercée par la rondelle 36.

Ici, la friction d'embrayage 10 comporte, en outre, un amortisseur auxiliaire 38, ou préamortisseur. Cet amortisseur auxiliaire 38 comporte, ici, deux rondelles de guidage 39, qui sont conjointement calées en rotation sur le voile 20 de 1 'amortisseur principal 15 par des pions 40 engagés chacun dans une ouverture de ce voile 20, un voile 41, qui est calé en rotation sur le moyeu 14, ici par sertissage, et, intervenant circonférentiellement entre ces rondelles de guidage 39 et ce voile 41, des ressorts 42. Les ressorts 42 ont une raideur plus faible que celle des éléments élastiques 24, l'amortisseur auxiliaire servant à filtrer les vibrations dans le domaine de ralenti du moteur du véhicule.

Ici, cet amortisseur auxiliaire 38 est disposé radialement en dessous des moyens élastiques 12 et axialement entre le voile 20 de l'amortisseur principal 15 et l'une des rondelles de guidage 18 de celui-ci, et, entre cette dernière et sa propre rondelle de guidage 39 la plus proche de celle-ci, intervient, axialement, une rondelle de frottement 43.

La rondelle élastique 36 de l'amortisseur principal 15 permet donc de serrer axialement entre le voile 20 et la rondelle de guidage 18 concernée l'ensemble que forment l'amortisseur auxiliaire 38 et la rondelle de frottement 43.

La rondelle de frottement 43 évite un contact métal sur métal entre l'amortisseur auxiliaire 38 et la rondelle de guidage 18.

On notera que les rondelles de guidage 39 sont globalement identiques, l'une étant prolongée à sa périphérie interne par rapport à l'autre. Ces rondelles 39 présentent des oreilles à leur périphérie externe par l'intermédiaire desquelles elles se rejoignent et sont accolées pour leur fixation mutuelle par les pions 41 présentant une tête épaulée en contact avec le voile intermédiaire 20. Cette tête forme une entretoise entre le voile 20 et les rondelles 39.

Plus précisément ce pion présente, au-delà de sa tête-entretoise, un fût traversant les oreilles précitées trouées à cet effet. Le fût peut être fileté et dans ce cas un écrou est prévu pour serrer les oreilles entre celui-ci et la tête du pion. En variante le fût est lisse et on procède à un rivetage de l'extrémité libre du fût.

On appréciera que les oreilles se raccordent à la partie principale des rondelles 39 par une partie inclinée. Les oreilles sont donc décalées axialement par rapport à la partie principale des rondelles. Elles s'étendent radialement au-delà du voile 41 fixé par sertissage sur le moyeu 14 présentant à sa périphérie externe une alternance de dents - ici formant des cannelures - et d'échancrures de forme trapézoïdale (figure 1) engagées à jeu circonférentiel dans des échancrures et des dents formées à la périphérie interne du voile intermédiaire 20 pour formation des moyens d'engrènement à jeu 22 intervenant entre le moyeu 14 (la périphérie externe de celui-ci) et le voile intermédiaire 20 (la périphérie interne de celui-ci).

Les oreilles s'étendent dans le plan du voile 41 en sorte que les ressorts 42, ici des ressorts à boudin, en variante des blocs en élastomère, sont attaqués de manière symétrique et travaillent dans de bonnes conditions.

Bien entendu le voile 41 et les rondelles 39 présentent en vis-à-vis des fenêtres pour montage des ressorts 42 à action circonférentielle.

Grâce à ces dispositions les rondelles 39 sont standardisées et il est possible de former simplement par avance un sous-ensemble moyeu 14 - amortisseur auxiliaire 38 avec les pions 40. Les rondelles 39 sont avantageusement métalliques.

Ici aucun contact ne se produit entre le voile 20 et le flasque 39 le plus proche. C'est par l'intermédiaire des pions épaulés 40, que transite l'effort de serrage de la rondelle 43.

Ici, le calage en rotation des rondelles de frottement 34 et 35, avantageusement en matière synthétique, est par ailleurs assuré par des saillies, qui, prévues à cet effet sur ces rondelles de frottement 34 et 35, sont engagées dans des ouvertures correspondantes des rondelles de guidage 18.

Suivant l'invention, et conjointement, les évidements 27 que comporte le voile 20 de l'amortisseur principal 15 pour les éléments élastiques allongés 24 sont ouverts radialement du côté opposé à l'axe de l'ensemble sur une partie au moins de leur longueur circonférentielle, il est prévu, au droit, au moins, de chacun de ces évidements 27, à la périphérie de plus grand diamètre des rondelles de guidage 18, une voûte 45, qui, axialement, s'étend de l'une à l'autre de ces rondelles de guidage 18, en étant solidaire de celles-ci, et qui, circulairement, s'étend sur toute la longueur circonférentielle, au moins, des fenêtres 26 des rondelles de guidage 18, et une garniture 46, en matière synthétique, est adossée radialement à la surface interne de cette voûte 45, sur une partie au moins de la longueur circonférentielle de celle-ci.

Ici, les évidements 27 du voile 20 sont ouverts radialement sur toute leur longueur circonférentielle, au-delà des doigts 30 que forme ce voile 20.

Ici, la garniture 46 a, intérieurement, un profil transversal courbe, à la manière d'une goulotte.

Préférentiellement, ce profil transversal est circulaire.

La garniture 46 épouse ainsi la forme circulaire des spires du ressort 24' le plus externe des éléments élastiques allongés 24.

Ici, la garniture 46 est insérée radialement entre au moins une entretoise 21 et la voûte 45, de part et d'autre des fenêtres 26 des rondelles de guidage 18.

La garniture 46 comporte, transversalement, une encoche 48 pour le passage de chaque entretoise 21. Les encoches 48 ont une forme complémentaire à celle des entretoises 21.

Le maintien radial et circonférentiel de la garniture 46 se trouve ainsi assuré dans ce cas par les entretoises 21, tant au repos qu'en service.

Ici, il y a une garniture 46 par élément élastique allongé 24, et cette garniture 46 déborde circonférentiellement de part et d'autre du logement 25 correspondant, en étant engagée sur une entretoise 21 à chacune de ses extrémités.

Par contre, la voûte 45 s'étend circulairement tout autour de l'axe de l'ensemble, de manière continue ou sensiblement continue.

Par exemple, figures 1 à 4, la voûte 45 est d'un seul tenant avec l'une des rondelles de guidage 18, ici celle qui est axialement la plus éloignée du disque de friction 13.

Elle forme alors un rebord circulairement continu à la périphérie de plus grand diamètre de cette rondelle de guidage 18, sensiblement parallèlement à l'axe de l'ensemble.

Conjointement, elle est sertie sur l'autre rondelle de guidage 18 par des pattes 50 qu'elle présente à cet effet de place en place en saillie sur sa tranche.

Par ces pattes 50, la voûte 45 traverse localement le disque de friction 13, celui-ci, et, plus précisément, son voile mince 16, étant pincé axialement entre cette voûte 45 et la rondelle de guidage 18 qui le porte.

Cela peut suffire à la fixation du disque de friction 13, et c'est le cas sur les figures 1, 2, 4 et 5. Ainsi dans les figures 1 et 2, si désiré, les entretoises 21 peuvent traverser le disque 16.

En variante, il peut être prévu, pour cette fixation, des rivets 52 supplémentaires et spécifiques, et c'est le cas sur la figure 3.

Quoi qu'il en soit, les rondelles de guidage 18 forment, avec la voûte 45 qui les relie, un boîtier avantageusement rigide.

En service, les éléments élastiques allongés 24 viennent porter radialement sur la garniture 46 qui leur est associée.

En pratique, celle-ci a circonférentiellement une longueur suffisante pour être encore opérationnelle aux limites du débattement angulaire entre les deux parties coaxiales 11A, 11B.

On notera que, sur leur bord radialement le plus éloigné de l'axe de l'ensemble, les culbuteurs 29 ont une surface extérieure arrondie, en correspondance avec le profil de la garniture 46.

Ces culbuteurs 29 permettent aux éléments élastiques allongés 24 de travailler dans d'excellentes conditions et de venir en contact avec la garniture 46.

Lors d'un première phase du débattement angulaire relatif entre le moyeu 14 et le disque de friction 13, l'amortisseur auxiliaire 38 intervient, tandis que l'amortisseur principal 15 forme un bloc, car les éléments élastiques allongés 24 sont plus raides que les ressorts 42.

Après rattrapage du jeu circonférentiel au niveau des moyens d'engrènement à jeu 22, les dents du voile 20 viennent en prise avec les dents du moyeu 14 et le voile 20 devient solidaire en rotation du moyeu 14, un mouvement angulaire relatif se produit alors entre ce voile 20 et les rondelles de guidage 18, avec l'intervention des éléments élastiques allongés 24.

On obtient ainsi un grand débattement angulaire relatif entre le voile 20 et les rondelles de guidage 18, ce débattement angulaire étant rendu possible grâce aux évidements 27 du voile 20, à la voûte 45 et à la garniture 46.

En association avec les culbuteurs 29, les doigts 30 du voile 20 permettent une compression aisée des éléments élastiques allongés 24.

Les blocs en matière élastique 28 constituent des butées de fin de course, par coopération avec les culbuteurs 29.

Pour le maintien et le centrage des ressorts 24', 24", les culbuteurs 29 présentent un téton étayé, figure 1, par lequel ils s'engagent dans ces ressorts 24', 24" en leur fournissant corollairement un appui.

Sur la figure 3, la garniture 46 associée à chacun des éléments élastiques allongés 24 s'étend transversalement sur les rebords 33 formant oeillères, des rondelles de guidage 18.

Sur la figure 4, elle comporte, latéralement, en saillie, le long de l'un au moins de ses bords, au moins un ergot 53, par lequel elle est en prise avec un perçage 54 de la rondelle de guidage 18 proche, ici la rondelle de guidage 18 axialement la plus éloignée du disque de friction 13.

Prévus en nombre suffisant, de tels ergots 53 peuvent suffire au maintien radial et circonférentiel des garnitures 46.

Eu égard par ailleurs à la liaison axiale assurée par la voûte 45, et au renfort mécanique dû à celle-ci, les entretoises 21 peuvent dans ce cas être supprimées.

A la figure 5, la voûte 45 forme une pièce distincte de l'une et l'autre des rondelles de guidage 18, et elle est sertie par des pattes 50 sur l'une et l'autre de celles-ci.

Mais, comme précédemment, elle forme globalement un boîtier avec les rondelles de guidage 18.

Bien entendu, la présente invention ne se limite pas aux formes de réalisation décrites et représentées, mais englobe toute variante d'exécution et/ou de combinaison de leurs divers éléments.

## Revendications

1. Disque d'embrayage du genre comportant au moins deux parties coaxiales (11A, 11B), qui sont montées rotatives l'une par rapport à l'autre dans les limites d'un débattement angulaire déterminé et à l'encontre de moyens élastiques (12) à action circonférentielle, et dont une porte un disque de friction (13), l'une (11A) de ces parties coaxiales (11A, 11B) comportant deux rondelles de guidage (18) et l'autre (11B) un voile (20) intermédiaire entre ces rondelles de guidage (18), et les moyens élastiques (12) comportant, répartis circulairement, une pluralité d'éléments élastiques allongés (24), dont chacun est disposé dans un logement (25) formé pour partie par une fenêtre (26) des rondelles de guidage (18) et pour partie par un évidement (27) du voile (20), caractérisée en ce que, conjointement, les évidements (27) que comporte le voile (20) pour les éléments élastiques allongés (24) sont ouverts radialement du côté opposé à l'axe de l'ensemble sur une partie au moins de leur longueur circonférentielle, en ce qu'il est prévu, au droit, au moins, de chacun de ces évidements (27), à la périphérie de plus grand diamètre des rondelles de guidage (18), une voûte (45), qui, axialement, s'étend de l'une à l'autre de ces rondelles de guidage (18), en étant solidaire de celles-ci, et qui, circulairement, s'étend sur toute la longueur circonférentielle, au moins, des fenêtres (26) des rondelles de guidage (18), et en ce qu'une garniture (46) en matière synthétique est adossée radialement à la surface interne de cette voûte (45), sur une partie au moins de la longueur circonférentielle de celle-ci.

2. Disque d'embrayage suivant la revendication 1, caractérisée en ce que la garniture (46) a, intérieurement, un profil transversal courbe, à la manière d'une goulotte.

3. Disque d'embrayage suivant la revendication 1 ou 2, caractérisée en ce que les rondelles de guidage (18) comportant un rebord (33), formant oeillère, en saillie vers l'extérieur le long du bord circonférentiel (32) radialement le plus externe de leurs fenêtres (26), la garniture (46) s'étend transversalement sur ce rebord (33).

4. Disque d'embrayage suivant l'une quelconque des revendications précédentes, caractérisée en ce que les rondelles de guidage (18) étant de place en place reliées l'une à l'autre part des entretoises (21), qui s'étendent sensiblement parallèlement à l'axe de l'ensemble, et qui, radialement, sont en retrait par rapport à la périphérie de plus grand diamètre de ces rondelles de guidage (18), la garniture (46) adossée à la voûte (45) est insérée radialement entre au moins une telle entretoise (21) et cette voûte (45), de part et d'autre des fenêtres (26) des rondelles de guidage (18).

5. Disque d'embrayage suivant la revendication 4, caractérisée en ce que la garniture (46) comporte transversalement une encoche (48) pour le passage d'une entretoise (21).

6. Disque d'embrayage suivant l'une quelconque des revendications précédentes, caractérisée en ce que, le long de l'un au moins de ses bords, la garniture (46) comporte latéralement en saillie au moins un ergot (53) par lequel elle est en prise avec un perçage (54) de la rondelle de guidage (18) correspondante.

7. Disque d'embrayage suivant l'une quelconque des revendications précédentes, caractérisée en ce qu'il y a une garniture (46) par élément élastique allongé (24), et cette garniture (46) déborde circonférentiellement de part et d'autre du logement (25) correspondant.

8. Disque d'embrayage suivant l'une quelconque des revendications précédentes, caractérisée en ce que la voûte (45) est d'un seul tenant avec l'une des rondelles de guidage (18), et, par des pattes (50) en saillie de place en place sur sa tranche, elle est sertie sur l'autre de celles-ci.

9. Disque d'embrayage suivant l'une quelconque des revendications 1 à 7, caractérisée en ce que, formant une pièce distincte de l'une et de l'autre des rondelles de guidage (18), la voûte (45) est sertie par des pattes (50) sur l'une et l'autre de celles-ci.

10. Disque d'embrayage selon la revendication 8 ou 9, caractérisée en ce que, par des pattes (50), la voûte (45) traverse localement le disque de friction (13), celui-ci étant pincé axialement entre cette voûte (45) et l'une des rondelles de guidage (18).

11. Disque d'embrayage suivant l'une quelconque des revendications précédentes, caractérisée en ce que la voûte (45) s'étend circulairement tout autour de l'axe de l'ensemble.

12. Disque d'embrayage suivant l'une quelconque des revendications précédentes, caractérisée en ce que les éléments élastiques allongés (24) portent, circonférentiellement, à leurs extrémités, sur des culbuteurs (29) engagés à pivotement sur des doigts (30) que le voile (20) forme circonférentiellement en saillie vers l'intérieur des logements(25).

13. Disque d'embrayage selon l'une quelconque des revendications 1 à 12, caractérisée en ce que pour la configuration de repos les éléments élastiques allongés 24 s'étendent sensiblement de manière rectiligne suivant chacun individuellement une corde de l'ensemble.

## Claims

1. A clutch disc of the kind comprising at least two coaxial parts (11A, 11B) which are mounted for rotation of one with respect to the other within the limits of a predetermined angular displacement and against the action of circumferentially acting resilient means (12), with one of the parts carrying a friction disc (13), one (11A) of the said coaxial parts (11A, 11B) comprising two guide rings (18), while the other one (11B) comprises a damper plate (20) arranged intermediately between the said guide rings (18), and the resilient means (12) comprise a plurality of elongate resilient elements (24) spaced apart circumferentially, each of which is disposed in a housing (25) which is defined partly by a window (26) in the guide rings (18) and partly by an aperture (27) in the damper plate (20), characterised in that, in combination, the apertures (27) formed in the damper plate (20) for the elongate resilient elements (24) are open radially on the opposite side from the axis of the assembly over at least part of their circumferential length, in that, in line at least with each of the said apertures (27), there is provided at the periphery of the guide ring (18) having the greater diameter a shroud (45) which extends axially from one of the said guide rings (18) to the other and is fixed to these latter, and which extends circumferentially over the whole of the circumferential length of at least the windows (26) in the guide rings (18), and in that a liner (46) of synthetic material is backed radially on the internal surface of the said shroud (45), over at least part of the circumferential length of the latter.

2. A clutch disc according to Claim 1, characterised in that the liner (46) has a curved internal transverse profile like that of a rainwater gutter.

3. A clutch disc according to Claim 1 or Claim 2, characterised in that the guide rings (18) have a flange (33) defining a fin that projects outwards along the radially outermost circumferential edge (32) of their windows (26), and the liner (46) lies transversely on the said flange (33).

4. A clutch disc according to any one of the preceding Claims, characterised in that, the guide rings (18) being joined to each other from place to place by spacers (21) which extend substantially parallel to the axis of the assembly, and which are in a radially withdrawn position with respect to the periphery of the said guide ring (18) having the larger diameter, the liner (46) that is backed on the shroud (45) is inserted radially between at least one said spacer (21) and the said shroud (45), on either side of the windows (26) in the guide rings (18).

5. A clutch disc according to Claim 4, characterised in that the liner (46) has a transverse notch (48) to permit passage of a spacer (21).

6. A clutch disc according to any one of the preceding Claims, characterised in that, along at least one of its edges, the liner (46) includes at least one laterally projecting toe by which it is in engagement with a through aperture (54) in the corresponding guide ring (18).

7. A clutch disc according to any one of the preceding Claims, characterised in that there is one liner (46) for each elongate resilient element (24), and the said liner (46) circumferentially overlaps the corresponding housing (25) on both sides.

8. A clutch disc according to any one of the preceding Claims, characterised in that the shroud (45) is integral with one of the guide rings (18), and is seamed on the other one of these latter by lugs (50) projecting from place to place over its length.

9. A clutch disc according to any one of Claims 1 to 7, characterised in that the shroud (45) is a separate component from each of the guide rings (18) and is seamed on both of these latter by means of lugs (50).

10. A clutch disc according to Claim 8 or Claim 9, characterised in that, by the lugs (50), the shroud (45) extends locally across the friction disc (13), the latter being gripped axially between the said shroud (45) and one of the guide rings (18).

11. A clutch disc according to any one of the preceding Claims, characterised in that the shroud (45) extends circumferentially fully around the axis of the assembly.

12. A clutch disc according to any one of the preceding Claims, characterised in that the elongate resilient elements (24) bear circumferentially at their ends on thrust inserts (29) which are pivotally engaged on circumferential fingers (30) defined by the damper plate (20) and projecting into the housings (25).

13. A clutch disc according to any one of Claims 1 to 12, characterised in that, in the rest configuration, the elongate resilient elements (24) extend substantially in a straight line, with each one individually following a chord of the assembly.

## Patentansprüche

1. Kupplungsscheibe mit wenigstens zwei koaxialen Teilen (11A, 11B), die im Verhältnis zueinander drehbar innerhalb der Grenzen einer bestimmten Winkelauslenkung und entgegen umfangsmäßig wirksamen elastischen Mitteln (12) gelagert sind und von denen einer eine Reibungsscheibe (13) trägt, wobei einer (11A) dieser koaxialen Teile (11A, 11B) zwei Führungsscheiben (18) und der andere (11B) eine Zwischenscheibe (20) zwischen diesen Führungsscheiben (18) umfaßt und wobei die elastischen Mittel (12), kreisförmig verteilt, eine Mehrzahl von langgestreckten elastischen Elementen (24) umfassen, die jeweils in einer Aufnahme (25) angeordnet sind, die zum Teil durch ein Fenster (26) der Führungsscheiben (18) und zum Teil durch eine Ausnehmung (27) der Zwischenscheibe (20) gebildet wird, **dadurch gekennzeichnet**, daß die Ausnehmungen (27), die die Zwischenscheibe (20) für die langgestreckten elastischen Elemente (24) enthält, radial auf der der Achse der Baugruppe gegenüberliegenden Seite wenigstens auf einem Teil ihrer Umfangslänge offen sind, und daß wenigstens in Höhe jeder dieser Ausnehmungen (27) an dem mit größerem Durchmesser ausgeführten Umfang der Führungsscheiben (18) eine Wölbung (45) vorgesehen ist, die sich axial von einer zur anderen dieser Führungsscheiben (18) erstreckt und fest mit diesen verbunden ist und die sich kreisförmig wenigstens auf der gesamten Umfangslänge der Fenster (26) der Führungsscheiben (18) erstreckt, und daß ein Belag (46) aus Kunststoff radial an die Innenfläche dieser Wölbung (45) wenigstens auf einem Teil ihrer Umfangslänge angefügt ist.

2. Kupplungsscheibe nach Anspruch 1, **dadurch gekennzeichnet**, daß der Belag (46) innen ein gekrümmtes Querprofil in der Art einer Rinne aufweist.

3. Kupplungsscheibe nach Anspruch 1 oder 2,
**dadurch gekennzeichnet**, daß die Führungsscheiben (18) eine einen Randansatz bildende Randleiste (33) aufweisen, die nach außen vorstehend entlang dem radial am weitesten außen befindlichen Umfangsrand (32) ihrer Fenster (26) verläuft, wobei sich der Belag (46) quer auf dieser Randleiste (33) erstreckt.

4. Kupplungsscheibe nach einem der vorherigen Ansprüche,
**dadurch gekennzeichnet**, daß die Führungsscheiben (18) stellenweise durch Abstandsstücke (21) miteinander verbunden sind, die sich in etwa parallel zur Achse der Baugruppe erstrecken und die relativ zum Umfang mit größerem Durchmesser der Führungsscheiben (18) radial zurückversetzt sind, wobei der an die Wölbung (45) angefügte Belag (46) radial zwischen wenigstens einem solchen Abstandsstück (21) und dieser Wölbung (45) beiderseits der Fenster (26) der Führungsscheiben (18) eingefügt ist.

5. Kupplungsscheibe nach Anspruch 4, **dadurch gekennzeichnet**, daß der Belag (46) in Querrichtung einen Einschnitt (48) für den Durchgang eines Abstandsstücks (21) enthält.

6. Kupplungsscheibe nach einem der vorherigen Ansprüche,
**dadurch gekennzeichnet**, daß der Belag (46) wenigstens entlang eines seiner Ränder seitlich vorstehend wenigstens eine Nase (53) umfaßt, durch die er mit einer Bohrung (54) der entsprechenden Führungsscheibe (18) in Eingriff kommt.

7. Kupplungsscheibe nach einem der vorherigen Ansprüche,
**dadurch gekennzeichnet**, daß es einen Belag (46) für jedes langgestreckte elastische Element (24) gibt und dieser Belag (46) umfangsmäßig beiderseits der entsprechenden Aufnahme (25) übersteht.

8. Kupplungsscheibe nach einem der vorherigen Ansprüche,
**dadurch gekennzeichnet**, daß die Wölbung (45) einstückig mit einer der Führungsscheiben (18) ausgeführt ist und durch stellenweise an ihrer Kante vorstehende Ansätze (50) an der anderen dieser Führungsscheiben aufgefalzt ist.

9. Kupplungsscheibe nach einem der Ansprüche 1 bis 7,
**dadurch gekennzeichnet**, daß die Wölbung (45), die ein von der einen und der anderen der Führungsscheiben (18) gesondertes Teil bildet, durch Ansätze (50) an der einen und der anderen dieser Führungsscheiben aufgefalzt ist.

10. Kupplungsscheibe nach Anspruch 8 oder 9,
**dadurch gekennzeichnet**, daß die Wölbung (45) mittels Ansätzen (50) örtlich durch die Reibungsscheibe (13) hindurchgeht, wobei diese axial zwischen der Wölbung (45) und einer der Führungsscheiben (18) eingeklemmt ist.

11. Kupplungsscheibe nach einem der vorherigen Ansprüche,
**dadurch gekennzeichnet**, daß sich die Wölbung (45) kreisförmig vollständig um die Achse der Baugruppe herum erstreckt.

12. Kupplungsscheibe nach einem der vorherigen Ansprüche,
**dadurch gekennzeichnet**, daß die langgestreckten elastischen Elemente (24) in Umfangsrichtung an ihren Enden auf Kipphebeln (29) aufliegen, die schwenkbar an Fingern (30) eingesetzt sind, die die Zwischenscheibe (20) in Umfangsrichtung zum Innern der Aufnahmen (25) vorstehend aufweist.

13. Kupplungsscheibe nach einem der Ansprüche 1 bis 12,
**dadurch gekennzeichnet**, daß sich in der Ruhekonfiguration die langgestreckten elastischen Elemente (24) jeweils in etwa geradlinig entlang einer Kreissehne der Baugruppe erstrecken.
